# DEMANDE DE BREVET EUROPEEN

(11) **EP 1 107 478 A1**
(43) Date de publication de la demande: **13.06.2001**
(21) Numéro de dépôt: 00204220.8
(22) Date de dépôt: 28.11.2000
(51) Int. Cl.: H04B 7/26

(54) **Système de transmission comportant une station de premier type et une station de deuxième type et procédé de synchronisation**

(30) Priorité: 07.12.1999 FR 9915418
(71) Demandeur: Koninklijke Philips Electronics N.V., 5621 BA Eindhoven (NL)
(72) Inventeur: Khalifa, Nabil, 75008 Paris (FR); Geslin, Serge, 75008 Paris (FR); Dvorkin, Vladimir, 75008 Paris (FR)
(74) Mandataire: Chaffraix, Jean

(57) **Abrégé**

Ce système de transmission comprend une station de premier type (1) et une pluralité de stations de deuxième type (2, 3, 4,....) qui comportent une partie émission (T) munie d'une commande de rythme d'émission pour émettre des données à un rythme d'émission et une partie réception (R) munie de circuits de synchronisation sur des données émises depuis la station de premier type. Quand les stations de deuxième type sont en mouvement, on modifie leur rythme d'émission pour faciliter la synchronisation de la réception de la station (1) en se basant uniquement sur le rythme de réception au niveau de ces stations de deuxième type.

Réseaux de téléphonie cellulaire.

## Description

L'invention concerne un système de transmission comportant, au moins, une station de premier type et une station de deuxième type comportant une partie émission munit d'une commande de rythme d'émission pour émettre des données à un rythme d'émission et une partie réception munie de circuits de synchronisation sur des données émises depuis une autre station pour fournir un rythme de réception.

L'invention concerne également un procédé de synchronisation pour synchronise des stations.

L'invention trouve son application dans l'industrie des réseaux de radiotéléphonie du type cellulaire utilisant la modulation CDMA notamment.

Un problème qui se pose avec ce genre de système est la synchronisation des récepteurs des stations. Pour retrouver l'information on doit effectuer des corrélations avec un mot formé de chips qui permet de retrouver la valeur d'un bit. On pourra à ce sujet consulter le brevet des Etats-Unis d'Amérique n°5,550,811.

Ces synchronisations deviennent très lourdes si on considère des stations de base (stations de premier type) sur lesquelles une pluralité de stations mobiles (stations de deuxième type) viennent se raccorder. Le travail de synchronisation au niveau des récepteurs de la station de base devient excessif.

La présente invention propose de simplifier dans une grande mesure la synchronisation des stations de bases ou des stations qui communiquent avec une pluralité d'autres stations.

Pour cela un tel système est remarquable en ce que le rythme d'émission est fixé à partir du rythme de réception.

La description suivante, en regard des dessins ci-annexés, le tout donné à titre d'exemple non limitatif, fera bien comprendre comment l'invention peut être réalisée. Sur les dessins:
La FIG.1 représente un système de transmission conforme à l'invention.
La FIG.2 représente un schéma du circuit de synchronisation des stations de deuxième type.
La FIG.3 représente un élément du circuit de synchronisation montré à la figure 2.
La FIG.4 représente un schéma du circuit de synchronisation des stations de premier type.

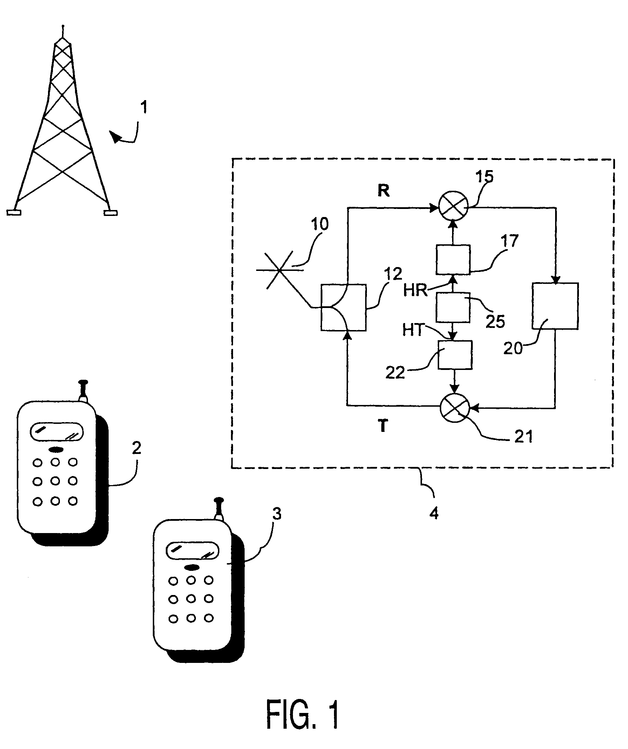

A la figure 1 qui représente un système conforme à l'invention, la référence 1 indique une station de premier type qui peut être, par exemple, une station de base d'un réseau radio-téléphonique utilisant le procédé de modulation CDMA qui est basé sur l'étalemen de spectre obtenu par un mot d'étalement de spectre. Les références 2, 3, 4,..indiquent des stations de deuxième type qui sont dans le cadre de l'exemple décrit, des stations mobiles susceptibles de se déplacer avec une certaine vitesse, ce qui amène une variation de fréquence apparente tant du côté de la station de base que du côté des stations mobiles.

La station mobile 4 est montrée plus en détail. On a représenté l'antenne 10 reliée à un duplexeur 12 qui sépare la voie émission "**T** " et la voie réception "**R**" un démodulateur 15 permet de rétablir les données en fonction d'un mot d'étalement de spectre, affecté à la communication station de base-station mobile, provenant d'un générateur de mot d'étalement de spectre 17 afin de les fournir à un circuit d'utilisation 20. Des données peuvent provenir aussi de ce circuit d'utilisation en vue d'être transmises vers la station de base. Pour cela, en utilisant toujours le même procédé CDMA, ces données formées d'éléments binaires sont " modulées "au moyen d'un modulateur 21 par un mot d'étalement, affecté à la communication en sens inverse, c'est-à-dire station mobile-station de base. Ce mot est fourni par un générateur de mot d'étalement de spectre 22. Les données sont finalement transmises en direction de la station de base 1. Les mots d'étalements sont formés de chips dont la durée est bien inférieure à celle des éléments binaires. Leur cadence d'apparition est fixée par des signaux d'horloge appliqués respectivement à l'entrée d'horloge HT et HR des générateurs 22 et 17 et élaborés par une horloge 25.

Lorsque les stations mobiles se déplacent, le rythme des chips doit s'adapter au changement de fréquence provoqué par l'effet Doppler. Comme le déplacement peut s'effectuer à des vitesses différentes, la synchronisation au niveau de la station de base implique des circuits de synchronisation affectés à chacune des stations mobiles.

Un des buts de l'invention est de simplifier la gestion de ces stations de base. Pour cela, le rythme du générateur 22 est déterminé à partir du générateur 17 pour compenser les effets dus aux mouvements des stations mobiles.

En effet, si une station de base émet à la fréquence " f " par suite d'une vitesse d'éloignement d'une station mobile, le récepteur de la station mobile devra se synchroniser sur une fréquence " f - Δ". Si on n'appliquait pas les mesures de l'invention, l'émetteur de la station mobile émettrait à la fréquence " f " et le récepteur de la station de base devrait aussi se synchroniser sur la fréquence : " f - Δ ". Si l'émetteur de la station mobile émet à la fréquence: " f + Δ ", alors la fréquence de réception de la station de base reste à " f " aucune mesure n'est donc à appliquer à la station de base pour se synchroniser sur différentes stations mobiles se déplaçant à des vitesses variables.

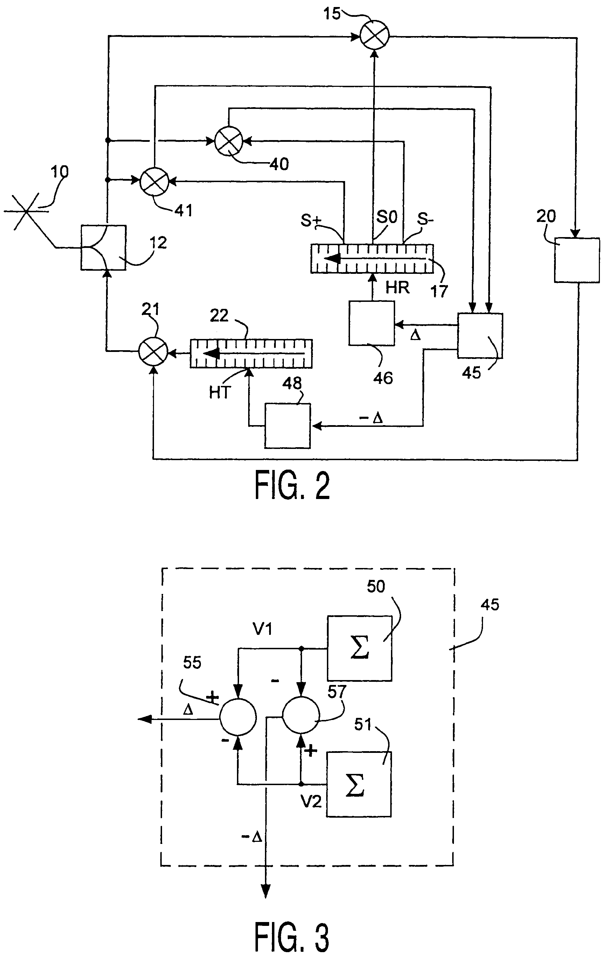

La figure 2 montre plus en détail le circuit de synchronisation. Sur cette figure les éléments communs avec ceux de la figure précédente portent les mêmes références. On y a représenté les générateurs de mots d'étalement de spectre 17 et 22 sous forme de registre à décalage. Ainsi, il est possible de prendre des fractions de chip du mot décalées dans le temps. Ceci est plus important pour le générateur 17 que pour le générateur 22. Sur le générateur 17, une première sortie S0 correspond à un état de synchronisme satisfaisant, c'est-à-dire que les mots d'étalement reçus correspondent à ceux engendrés localement à cette sortie. Une sortie S+ correspond à des chips ou des fractions de chip déjà fournis en S0 et une sortie S- correspond à des chips ou des fractions de chip qui vont être fournis. Les sorties S- et S+ sont reliées respectivement aux démodulateurs 40 et 41. Ainsi en cas de dérive de fréquence, l'analyse des signaux de sortie de ces démodulateurs, faite par un circuit d'analyse 45 permet de savoir dans quel sens la dérive de fréquence se produit et de là on peut modifier la fréquence de l'horloge constituée par l'oscillateur 46 pour que le signal à la sortie S0 corresponde à un maximum de corrélation avec les données reçues. Pour cela, on utilise un dispositif dénommé DLL (Delay Locked Loop) dont fait partie le circuit d'analyse 45. Ce circuit fournit un signal de correction de fréquence à l'oscillateur 46. Du circuit 45, on déduit une valeur A de dérive de fréquence qui est appliquée, d'une part, telle quelle à l'oscillateur de réception 46 et avec un signe différent - Δ à l'oscillateur d'émission 48.

La figure 3 explicite le circuit d'analyse 45. Deux circuits filtres d'intégration 50 et 51, connectés respectivement aux sorties des démodulateurs 40 et 41, fournissent des grandeurs V1 et V2. Comme ces tensions varient linéairement en fonction du décalage temporel entre le mot engendré à la sortie concernée du générateur et le mot reçu, la comparaison de ces deux signaux, faite par le circuit de comparaison 55, donne une grandeur Δ qui définit la correction à apporter à la fréquence de l'oscillateur 46 et la compensation - Δ à appliquer à l'oscillateur d'émission 48. Ceci est obtenu par le circuit de comparaison 57.

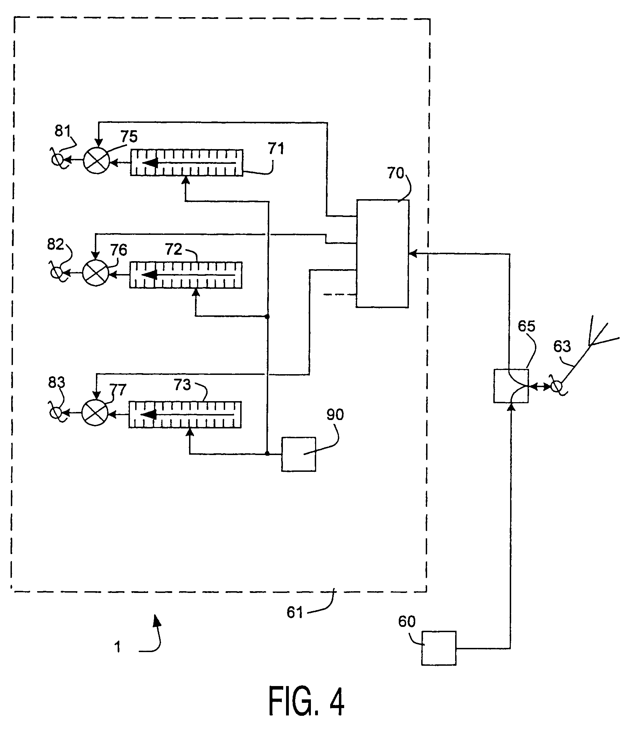

La figure 4 explicite la structure de la station de base dite de premier type. Cette station comporte une partie émission 60 et une partie réception 61. Ces deux parties utilisent la même antenne 63 via un multiplexeur 65. On s'intéresse plus particulièrement à la partie réception 61. Cette partie comporte un circuit de réception 70 qui fournit sur différentes sorties un flot de données relatives à une pluralité de stations de deuxième type. Le tri de ces données s'effectue par un code d'étalement affecté à chacune de ces stations de deuxième type. Ces codes sont engendrés par des générateurs de code 71, 72, 73,.... qui au moyen d'un corrélateur 75, 76, 77,..., fournissent finalement des données utiles à des bornes 81, 82, 83,.... Grâce aux mesures préconisées par l'invention, une seule base de temps 90 est utilisée pour fixer le rythme des générateurs de code 71, 72, 73,....

## Revendications

1. Système de transmission comportant, au moins, une station de premier type et une station de deuxième type comportant une partie émission munie d'une commande de rythme d'émission pour émettre des données à un rythme d'émission et une partie réception munie de circuits de synchronisation sur des données émises depuis une autre station pour fournir un rythme de réception, caractérisé en ce que le rythme d'émission est fixé à partir du rythme de réception.

2. Système de transmission selon la revendication 1, formé d'une station de premier type muni d'une partie réception comportant un circuit de synchronisation pour déterminer le rythme de réception d'une pluralité de stations de deuxième type, caractérisé en ce que le circuit de synchronisation de la station de premier type est commun pour toutes les stations de deuxième type.

3. Système de transmission selon la revendication 1 ou 2, caractérisé en ce que ce que les stations de deuxième type comportent des moyens pour évaluer un écart de fréquences, de la fréquence de réception par rapport à la fréquence d'émission de la station de premier type et des moyens pour modifier la fréquence d'émission de la station de deuxième type en fonction de cet écart de fréquences.

4. Station de premier type convenant à un système selon la revendication 1 à 3 comportant un circuit de réception commun à toutes les stations de premier type auxquelles elle est rattachée.

5. Procédé de synchronisation convenant à un système selon l'une des revendications 1 à 4, caractérisé en ce qu'il comporte les étapes suivantes:
- mesure d'écart de rythme de réception, effectuée au niveau des stations de deuxième type,
- comparaison du rythme d'émission au niveau de la station de deuxième type en prenant la valeur d'écart opposée,
- synchronisation unique du rythme de réception au niveau de la station de premier type.
